# EUROPEAN PATENT APPLICATION

(11) **EP 1 933 523 A1**
(43) Date of publication of application: **18.06.2008**
(21) Application number: 06291932.9
(22) Date of filing: 13.12.2006
(51) Int. Cl.: H04L 29/06, H04L 12/22

(54) **Delegated cryptographic processing**

(71) Applicant: Axalto S.A., 92190 Meudon (FR)
(72) Inventor: Goubin, Louis c/o Axalto SA, I.P.D., 92197 Meudon Cedex (FR)

(57) **Abstract**

The invention relates to a system comprising a smart card CARD, a smart card middleware MW, and a delegation server D_SRV.

The smart card middleware MW redirects smart card commands which the smart card CARD is not able to process to the delegation server D_SRV, which executes the smart card commands on behalf of the smart card CARD.

## Description

The invention relates to computer security systems comprising smart cards and middleware.

This invention is particularly relevant in the context of smart card systems comprising low-end smart cards.

Smart cards are pocket-sized devices with at least one embedded integrated circuit.

Examples of smart cards comprise bank cards, GSM SIM cards, healthcare cards, etc. Smart cards exist in different form factors (regular credit card shape, USB key shape, etc.).

Smart cards may communicate via numerous interfaces such as contact interfaces, contact-less interfaces etc. Smart cards typically operate as a "slave" device accepting orders from another device. Such orders are often standardized, for example the ISO 7816 suite of standards defines the protocol and commands needed to communicate with ISO 7816 compliant smart cards. ISO 7816 specifies APDUs (application protocol data units) which can be used to carry commands to a smart card (e.g. read command, write command, authenticate command, unblock PIN command, etc.).

High-end smart cards include powerful features such as match-on-card biometrics, fast asymmetric cryptography capabilities, big memory capacity (e.g. several Megabytes), powerful 32 bit processor, etc.

On the other hand, low-end smart card typically comprise no PKI capability, and have a small memory (e.g. 16 Kilobytes).

Many low-end smart cards are still sold, and many low-end smart cards are deployed (legacy products).

The term "middleware" has different meanings depending on the context. In the context of security devices based systems (in particular smart cards based systems), the term "middleware" (or "smart card middleware", used if an ambiguity is possible) has a specific meaning. Such middleware refers to a module usually consisting of a set of components (typically so are components such as dynamic link libraries "DLL") which allows an application (typically referred to as the client application) to communicate with a smart card through a smart card accepting device. The smart card accepting device can communicate with the smart card in contact or contactless mode. With the advent of TCP/IP smart cards, the middleware may be a piece of web server software located on a remote hardware server, communicating with the smart card through a network such as the Internet. A middleware typically offers a number of high-level commands to an external client application requiring card services. By high-level commands, We mean commands which are as independent as possible of the smart cards characteristics. For example, a middleware command may consist in the loading of an X.509 certificate into a smart card. The middleware translates such high-level commands into one or more low-level commands. Low-level ; commands are smart card commands such as ISO 7816 APDU commands. For example, let's consider the high-level middleware command "load certificate". The middleware can convert this command into the following series of low-level commands: one or more ISO 7816 SELECT commands for navigating through the smart card file system (for file system based smart cards), one command to check if a certificate file exists, one command to create a certificate file in case no such file exists, one command to select the certificate file, one command to obtain the rights necessary to write to the certificate file, and a series of ISO 7816 UPDATE_BIN commands to write the certificate. A certificate is typically longer than the maximum amount of data which can be carried by typical ISO 7816 UPDATE_BIN command (which is 255 bytes in general, for T=0 smart cards). Therefore several UPDATE_BIN commands often need to be called. For example, each UPDATE_BIN command may write a 255 bytes block of data until the whole certificate has been loaded. In addition, extra information relating to this certificate may have to be loaded into the smart card.

As can be seen from the above example, the middleware is advantageous, as it offers a simple interface, which creates an abstraction layer. Indeed, a middleware command (e.g. load_certificate) is the same whether the certificate is to be loaded into a smart card (whatever the type of smart card: java card, native card, .NET card, etc.) or even to a completely different medium such as the hard disk of the computer, or a hardware security module. A hardware security module is a high security computer equipped with anti-tampering mechanisms, suitable in particular for the management of high numbers of cryptographic keys on behalf of a server. The middleware translates the high-level commands as appropriate.

Examples of smart card accepting devices comprise personal computers equipped with a smart card reader, any kind of computer (including laptops or PDAs) which comprise a USB slot to which a USB smart card can be connected, etc.

Examples of middleware comprise CAPI middleware, PKCS#11 middleware, OCF middleware, etc.

A middleware is often divided into layers. Different middleware architectures may share certain layers. For example, the PC/SC working group has specified PC/SC drivers for smart card readers. The PC/SC working group has also specified smart card base components (in particular a resource manager) allowing in particular to send APDUs to an ISO 7816 smart card through a PC/SC compliant reader.

Most middleware (e.g. the three types mentioned above, namely CAPI, PKCS #11, OCF) are typically built on top of a PC/SC layer. Sometimes a CAPI middleware may reroute calls to a PKCS#11 middleware, or vice-versa.

Smart cards commands are often protected by cryptographic means. A cryptographically protected command is typically a command which genuineness can be checked by entities having access to the cryptographic keys needed to verify the cryptographic protection of the command. For example, it is possible to sign and/or encrypt commands, in order that a smart card does not execute a command unless it has been secured (e.g., signed and encrypted) by an entity which it trusts. For example, ISO 7816-4 specifies a secure messaging mechanism to cryptographically protect smart card commands.

If the command has been only signed, then a hacker can potentially intercept the command and read it. Therefore a hacker can know what the smart card is going to execute. However, a hacker cannot modify the command in order that the smart card executes a different command, as the signature of the command would become invalid. In order to modify the command and its signature, the hacker would need access to the cryptographic keys, which are typically stored only in tamperproof devices (protected servers, smart cards, etc.). A command may be signed with an asymmetric algorithms such as RSA, DSA, elliptic curves, etc. This is convenient since the verification of the signature does not involve any secret (only the public key is needed). A command may also be "signed" with a symmetric key (such as DES, 3DES or AES). Such symmetric signature is often called a MAC, and is well-known in the art as well. One advantage of the MAC over asymmetric signatures is the fact that it's easier to compute (less processing involved than with asymmetric algorithms). On the other hand, key distribution and secure key storage are more complex.

If the command has been only encrypted, then a hacker intercepting the command cannot read it. Therefore a hacker cannot normally know what the smart card is going to execute by simply reading the command. However, a hacker can potentially modify the command in order for the smart card to execute a different command, if he has access to the key needed to encrypt the command (which may be public). A command may be encrypted with an asymmetric algorithms such as RSA, DSA, elliptic curves, etc. This is convenient since the decryption can only be carried out by the unique holder of the private key. However, since the encryption key is a public key, anybody finding it can encrypt commands for the smart card. A command may also be encrypted with a symmetric key (such as DES, 3DES or AES). One advantage of the symmetric encryption over asymmetric encryption is the fact that it's easier to compute (less processing involved than with asymmetric algorithms). Another advantage is that the symmetric key being secret, it is normally not known by the hacker. However, since a symmetric key needs to be shared by at least two entities (the encrypting entity and the decrypting entity), key distribution and secure key storage are more complex to manage, as in the art.

It is possible to both encrypt and sign a command in order to benefit from the advantages of both techniques. In particular, if the command has been encrypted with a public key, it typically has to be signed as well in order to the genuineness of the command. It is also known in the art that many variants have been devised, e.g. variants involving a key diversification step, or adding a random element in the data to be signed in order to avoid replay attacks (intercepting a command with its signature is not enough to be able to send the same command later, thanks to the random part).

It should be noted that a cryptographically protected command is not the same as a command subject to access control. A command subject to access control is a command such that it will not execute if certain access conditions are not met. For example, a command may be restricted to entities knowing the smart card PIN code, or to entities which are able to authenticate with a DES-based challenge-response mechanism (proving that they know a particular DES key). Until a correct PIN code has been presented to the smart card (respectively until knowledge of the DES key has been proven), no command which access control is restricted to entities knowing the PIN code (respectively the DES key) will be executed by the smart card. However, once knowledge of a correct PIN (respectively DES key) has been proven, such command will execute if it is altered by a hacker, while a cryptographically protected command normally will not.

Typically, smart card commands are subject to access control, and sometimes the commands are also cryptographically protected.

Middleware commands are in general not protected by cryptographic means, but only protected by access control. For access control, the middleware typically relies on the smart card (the smart card is the entity accepting or rejecting the command(s)).

One problem with state of the art systems comprising a smart card and a smart card middleware is the fact that they often require high-end smart cards. For example, a system used for email signature and encryption typically requires a smart card able to perform asymmetric cryptography operations, and quickly enough. If the smart card does not have the necessary features, the high level command passed to the middleware cannot be translated in low-level commands, because there are no low-level commands able to service the high-level command (or at least some low-level commands are lacking).

Unfortunately, in some applications, it is not possible or very inconvenient to deploy high-end smart cards. For example, let's consider a cellular network operator who has deployed tens of millions of low-end SIM cards. The cellular network operator may be willing to offer its customers smart card based PKI services (e.g. e-payment etc.), but this would require deploying tens of millions of new SIM cards (assuming that PKI functions are supported by low-end smart cards of this example), which may be considered unrealistic.

A second example is the following. Let's consider a company having deployed low-end smart cards to each of its employees, in order to let its employees enter each company buildings only if they have the access rights to access such building. If the company later wants to deploy the above mentioned system for email signature and encryption, then every employee should carry two smart cards, one for building access and one for email security. Alternatively, the low-end smart card features should be reprogrammed into the high-end smart cards (e.g. a dual interface smart card with both contact and contact-less capabilities). However this task may be complex and expensive as it may involve personalizing the card (including printing the employee name and picture, etc.). The personalization may be a very complex and expensive task (the cost of the smart card, either high-end or low-end, may be marginal).

It is an object of the invention to propose a system comprising smart cards and middleware, the system being able to provide services normally available only with high-end smart cards, the system being based at least partially on low-end smart cards.

A system according to the invention comprises a smart card and a smart card middleware. The system further comprises a delegation server. The smart card middleware redirects smart card commands which the smart card is not able to process to the delegation server, which executes the smart card commands on behalf of the smart card.

The middleware may recognize the capabilities of the smart card from its type, which may be indicated for example in a smart card serial number or ATR (Answer To Reset). Alternatively, when supported by the smart card, the middleware may query the smart card in order to obtain its capabilities. It is also possible for the middleware to simply try to call a command, and when the smart card replies that the command is not supported, to redirect the command to the delegation server.

A delegation server is advantageous, as such server can be administered centrally, which avoids having to manage each smart card individually (personalization etc.).

The system offers a smooth transition to a high-end smart cards system. An existing system may be upgraded in two steps.

In a first step, a delegation server may be added, in order to obtain a system according to the invention. This allows a fast transition in order to put the new services in place with minimum user involvement. When the middleware resides on the user's personal computer or other electronic device, it is advantageous (when possible) to use an automatic update procedure in order to modify the middleware without having the user install something himself or with IT support staff assistance.

When possible and if appropriate, a second step may consist in progressively replacing each low-end smart card with a high-end smart card. This may take a very long time, and does not affect the system, which either relies on the high-end smart card commands, or, when the smart card is still a low-end smart card, redirects the relevant commands to the delegation server.

This system is also advantageous as it lets organizations deploy smart card based solutions and services based on low-end (possibly already deployed) smart cards, with minimal changes to the software architecture.

Indeed, the applications which call the middleware do not need to know that a command has been redirected to another entity (and do not necessarily notice it), and therefore the applications do not need to be adapted.

Only the middleware needs to be modified.

It should be noted that sometimes the applications and the middleware are bundled together, in which case the bundle needs to be modified since one of its components (the middleware) needs to be modified. However, the other advantages remain.

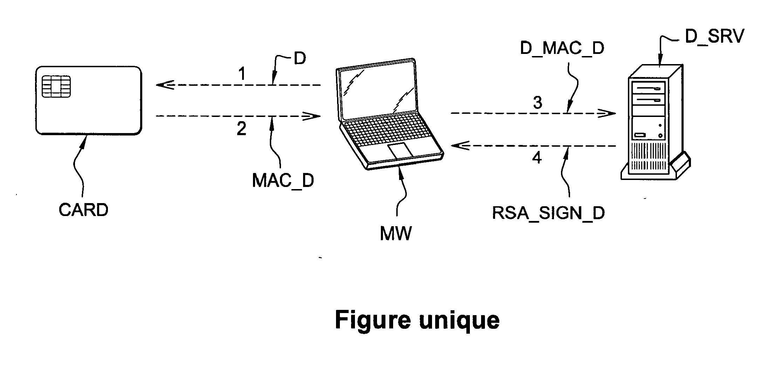

The invention and its advantages will be explained more in details in the following specification referring to the appended drawings, in which Figure 1 represents a preferred system according to the invention.

A system according to a preferred embodiment of the invention comprises a smart card CARD, a smart card middleware MW, and a delegation server D_SRV. The middleware MW is typically installed on a personal computer such as a laptop, represented on Figure 1 as the entity executing the middleware MW.

The smart card middleware MW preferably redirects smart card commands to the delegation server D_SRV only if the smart card CARD has been properly authenticated by the system.

This is advantageous as this avoids weakening the security of the system.

The delegation server D_SRV is preferably stored in a secure zone. For example, the delegation server may be a piece of server software, instated on a hardware server, the hardware server being protected by firewalls and other state of the art protection devices, and being located in a strong room which access is restricted to authorized personnel in a manner known in the art.

The smart card CARD may be authenticated by the smart card middleware MW, by the delegation server D_SRV, or by both.

In general, authentication by the delegation server D_SRV is preferred, as the delegation server D_SRV is more easily protected than the middleware which is typically more prone to attacks.

One example of commands which can be redirected consists in commands designed to perform an asymmetric cryptography operation on input data D. Asymmetric cryptography such as RSA typically requires either a crypto-processor or a very powerful processor, which is typically not available on low-end smart cards. However, even low-end smart cards normally implement symmetric cryptography algorithms. The authentication of the smart card CARD by the delegation server D_SRV may therefore consist in:
- the smart card CARD performing a symmetric cryptography operation on the data D with a symmetric key shared between the smart card CARD and the delegation server D_SRV, and
- the delegation server D_SRV verifying that the symmetric cryptography operation was correct, before returning the result of the asymmetric cryptography operation to the smart card middleware MW.

In general this requires the symmetric key of the low-end smart card to be loaded into the delegation server. Alternatively the delegation server D_SRV may be connected to another server which stores such keys and can execute the required operations (involving such keys) on its behalf.

In particular, commands which can be redirected may comprise asymmetric signature commands for signing data D. Authentication of the smart card CARD by the delegation server D_SRV then preferably consists in:
- the smart card CARD computing a MAC (which is a sort of symmetric cryptography signature) of the data D with a symmetric key shared between the smart card CARD and the delegation server D_SRV, and
- the delegation server D_SRV verifying that the MAC is correct before returning the asymmetric signature of said data D to the smart card middleware MW.

The system may then be viewed as acting as a translator of symmetric signatures (verifiable in a closed environment) into asymmetric signatures (verifiable in an open environment, i.e. by anybody since the public keys can be made available to anybody).

In preferred embodiments, smart card commands are cryptographically projected smart card commands. This avoids modifications in the commands while they are sent to the delegation server D_SRV.

An asymmetric public key can be used for cryptographically protecting smart card commands (encryption of the command, possibly via a symmetric session key). Secret or private keys could be used as well, however in general they would need to be stored in or accessible by the middleware MW. The middleware MW is typically the entity generating the smart card commands, and is typically less secure than the delegation server D_SRV and the smart card CARD.

The system is advantageous in order to implement EAP-TLS authentication with low-end smart cards, which are typically not powerful enough for that purpose. Such smart card CARD can be a TCP/IP smart card implementing the EAP-TLS protocol, although in general it would be a simpler card. CPU intensive or unsupported commands such as the asymmetric cryptography operations required in the EAP-TLS protocol are then redirected to the delegation server D_SRV.

The invention also relates to a method for a smart card middleware MW to dispatch smart card commands. The smart card middleware MW dispatches smart card commands to a smart card CARD when such smart card CARD supports said commands, and to a delegation server D_SRV when the smart card CARD does not support said commands, Before dispatching the command to a delegation server D_SRV, the middleware MW preferably authenticates the smart card CARD.

For example, if the smart card CARD does not support the RSA signature command, the method may work as follows. In a first step, the middleware MW may send some data D (to be signed), or a hash of the data D, to the smart card CARD. In a second step, the smart card CARD can compute a MAC MAC_D of the data D (or of its hash), and send it back to the middleware MW. In a third step, the middleware can send the data D (or a has of the data D) together with the MAC of the data D (or of the hash of the data D), together denoted D_MAC_D, to the delegation server D_SRV. In a fourth step, the delegation server D_SRV may check that the MAC is correct, and if it is, compute the RSA signature of the data D, denoted RSA_SIGN_D, and return it to the middleware MW.

## Claims

1. System comprising a smart card (CARD) and a smart card middleware (MW), the system being **characterized in that**
a. the system comprises a delegation server (D_SRV),
b. the smart card middleware (MW) redirects smart card commands which the smart card (CARD) is not able to process to the delegation server (D_SRV), which executes the smart card commands on behalf of the smart card (CARD).

2. System according to claim 1, wherein the smart card middleware (MW) redirects smart card commands to the delegation server (D_SRV) only if the smart card (CARD) has been properly authenticated by the system.

3. System according to claim 2, wherein the smart card (CARD) is authenticated by the smart card middleware (MW).

4. System according to claims 2 or 3, wherein the smart card (CARD) is authenticated by the delegation server (D_SRV).

5. System according to claim 4, wherein smart card commands redirected to the delegation server include a command designed to perform an asymmetric cryptography operation on input data (D), and wherein for such command, authentication of the smart card (CARD) by the delegation server (D_SRV) consists in
a. the smart card (CARD) performing a symmetric cryptography operation (MAC_D) on said data (D) with a symmetric key shared between the smart card (CARD) and the delegation server (D_SRV), and
b. the delegation server (D_SRV) verifying that the symmetric cryptography operation (MAC_D) was correct, before returning the result of the asymmetric cryptography operation (RSA_SIGN_D) to the smart card middleware (MW).

6. System according to claim 5, wherein the smart card command includes an asymmetric signature command for signing data (D), and wherein the authentication of the smart card (CARD) by the delegation server (D_SRV) consists in
a. the smart card (CARD) computing a MAC (MAC_D) of said data (D) with a symmetric key shared between the smart card (CARD) and the delegation server (D_SRV), and
b. the delegation server (D_SRV) verifying that the MAC (MAC_D) is correct before returning the asymmetric signature (RSA_SIGN_D) of said data (D) to the smart card middleware (MW).

7. System according to any previous claim, wherein some of the smart card commands are cryptographically protected smart card commands.

8. System according to claim 7, wherein the smart card middleware (MW) uses an asymmetric public key for cryptographically protecting smart card commands:

9. according to any previous claims, wherein the smart card (CARD) implements the EAP-TLS protocol, and wherein the asymmetric cryptography operations required in the EAP-TLS protocol are redirected to the delegation server (D_SRV).

10. Method for a smart card middleware (MW) to dispatch smart card commands, **characterized in that** the smart card middleware (MW) dispatches smart card commands to a smart card (CARD) when such smart card (CARD) supports said commands, and to a delegation server (D_SRV), when the smart card (CARD) does not support said commands.
